# FASCICULE DE BREVET EUROPEEN

(11) **EP 0 791 171 B1**
(45) Date de publication et mention de la délivrance du brevet: **19.01.2000**
(21) Numéro de dépôt: 95940298.3
(22) Date de dépôt: 09.11.1995
(51) Int. Cl.: G01K 11/06

(54) **DISPOSITIF DE VERIFICATION DE LA TEMPERATURE REGNANT DANS UNE ENCEINTE, NOTAMMENT DANS DES REFRIGERATEURS DOMESTIQUES**
VORRICHTUNG ZUR ÜBERPRÜFUNG DER TEMPERATUR IN EINEM BEHÄLTER, INSBESONDERE IN EINEM HAUSHALTSKÜHLSCHRANK
DEVICE FOR MONITORING THE PREVAILING TEMPERATURE IN AN ENCLOSURE SUCH AS A HOUSEHOLD REFRIGERATOR

(30) Priorité: 10.11.1994 FR 9413580
(43) Date de publication de la demande: 27.08.1997
(73) Titulaire: Premark FEG L.L.C., Wilmington, Delaware 19801 (US)
(72) Inventeur: TIBY, Gérard, F-94370 Sucy-en-Brie (FR)
(74) Mandataire: Desaix, Anne
(86) Numéro de dépôt international: FR9501482
(87) Numéro de publication internationale: WO9615432

(56) Documents cités:
- WO-A-84/00212
- DE-A- 3 243 031
- DE-A- 3 914 599
- DE-U- 8 802 656

## Description

L'invention concerne un dispositif particulièrement simple de la vérification de la température régnant dans une enceinte, dès lors que la température doit y être maintenue dans un intervalle autorisé entre deux valeurs extrêmes. Tel peut être le cas pour le contrôle de la température dans une enceinte de réfrigération, plus particulièrement un réfrigérateur. Aussi étrange que cela puisse paraître, la plupart des réfrigérateurs sont livrés à leur clientèle sans dispositif de vérification simple de la température régnant dans ces enceintes. La plupart de ces enceintes de réfrigération sont en général pourvues de moyens, notamment bouton de commande permettant le réglage de la température à des valeurs susceptibles a priori de s'étager dans une certaine gamme de valeurs. Mais le choix de ces valeurs relève souvent pour la plupart des utilisateurs de plus parfait empirisme.

Et pourtant, l'on sait que pour obtenir une conservation satisfaisante des aliments, la température doit être maintenue, par exemple, au sein d'un réfrigérateur domestique, à une valeur comprise entre environ 2°C et 6°C.

Des dispositifs de vérification de la température régnant dans une enceinte sont connus des documents WO-A-84/00212, DE-U-8802656 et DE-A-3914599. Toutefois, ces documents décrivent une seule matière indicative de la température par compartiment. Ils ne décrivent pas de contenant comportant deux matières non miscibles dans un seul et unique compartiment.

L'invention a pour but la production d'un dispositif extrêmement simple et peu coûteux permettant aux utilisateurs, notamment des particuliers, une vérification aisée et immédiate du caractère approprié de la température régnant dans leur réfrigérateur. Mais les besoins de cette vérification simple se font également sentir dans d'autres domaines, par exemple dans des enceintes servant au transport d'aliments dans des conditions de réfrigération appropriées.

C'est sans aucun doute l'extrême simplicité du dispositif proposé par l'invention qui en constitue l'atout principal. En effet, le dispositif de vérification de la température régnant dans une enceinte, des lors que cette température doit être maintenue dans un intervalle autorisé compris entre deux valeurs extrêmes déterminées, est caractérisé en ce qu'il comporte, contenues dans un contenant commun, deux matières distinctes donnant respectivement lieu à des changements d'état aux températures égales à ces deux valeurs extrêmes, la vérification étant fondée sur la détection des états respectifs de ces deux matières, notamment de façon visuelle lorsque les parois du contenant sont transparentes, et en ce que ces deux matières sont non miscibles entre elles et contenues dans un même et unique compartiment du susdit contenant.

Dans un premier mode de réalisation du dispositif de l'invention, les deux matières présentent des points de fusion constants respectivement égaux aux deux susdites valeurs extrêmes, et la vérification est fondée sur la détection des états respectifs, solide ou liquide, de chacune de ces deux matières au moment de la vérification.

Dans un premier mode de réalisation, les deux matières consistent en deux eutectiques dont les températures de changement d'état sont respectivement égales aux deux valeurs extrêmes susdites. Lorsque, comme dans le cas préféré de l'invention, le dispositif en cause est destiné à la vérification de la température dans une enceinte de réfrigération, plus particulièrement un réfrigérateur domestique, l'une des deux matières peut également être constituée par de l'eau, l'autre étant alors constituée par un eutectique, dont la température de fusion est avantageusement de 6°C.

Il va de soi que tout intervalle plus resserré (ou plus étendu) de température peut être envisagé, étant entendu que dans chaque cas l'on aura recours à l'utilisation de matières, notamment d'eutectiques susceptibles de changer d'état aux températures extrêmes choisies.

L'invention peut également s'analyser comme consistant en un procédé de vérification immédiate de la température effective régnant dans l'enceinte, ce procédé comprenant alors la mise en oeuvre des deux matières susmentionnées et la détection des états solides ou liquides, de ces deux matières.

L'invention est donc d'une simplicité extrême. Elle permet à tous les utilisateurs d'enceintes de réfrigération de disposer d'un moyen particulièrement peu coûteux pour s'assurer de la qualité de la réfrigération.

Elle remédie aux difficultés que rencontrent plus particulièrement les utilisateurs de réfrigérateur pour s'assurer des bonnes conditions de conservation des aliments, sans même qu'ils aient à s'interroger sur l'intervalle approprié de température qui doit être respecté, intervalle dont la plupart n'ont d'ailleurs même pas connaissance.

En particulier lorsque les deux matières sont susceptibles de passer de l'état liquide ou solide ou vice et versa, rien n'est plus simple pour l'utilisateur que le constat des états solides de des deux matières (lorsque la réfrigération est trop poussée) de l'état solide de l'une et de l'état liquide de l'autre (lorsque la température est convenablement réglée) ou enfin des états liquides des deux matières (lorsque la température est trop élevée et menace la qualité de la conservation des aliments).

Toutes les formes peuvent être imaginées pour le dispositif en question, qui peut se présenter sous forme de "gadget" dont l'utilisation est même à la portée des enfants. Sans que la forme du contenant ait une réelle importance, on imagine facilement que des formes adéquates peuvent se présenter sous forme de cylindres ou sphères hermétiquement fermées. La constatation des états respectifs des deux matières sera d'autant plus facile qu'en faisant rouler ces cylindres ou sphères, un trouble serait ou non constaté à l'intérieur du contenant, en particulier dans la cas de matières non miscibles entre elles et à une température dépassant ou non la valeur maximum autorisée.

Il va sans dire que le dispositif selon l'invention peut également être installé à demeure, par exemple à proximité d'une paroi de l'enceinte de réfrigération.

Bien que les conditions d'utilisation les plus favorables soient celles qui viennent d'être décrites, le dispositif selon l'invention peut également être mis en oeuvre dans un système un peu plus sophistiqué de réglage de la température dans les enceintes du genre en question, par exemple lorsqu'il est associé à des moyens permettant la détection des changements d'états desdites matières et ayant l'aptitude à produire des signaux exploitables par le dispositif de réfrigération associé à la susdite enceinte de réfrigération, pour commander soit un apport supplémentaire de frigories au sein de l'enceinte, soit au contraire une réduction ou interruption momentanée de ces apports, jusqu'à ce que la température régnant dans l'enceinte soit ramenée dans l'intervalle autorisé de températures.

Les moyens du genre en question peuvent être d'une infinie variété, par exemple circuits électriques dans lesquels sont intercalées les susdites matières, la détection reposant sur les variations de résistance observées selon que ces matières sont à l'état solide ou liquide, ou dispositif de mesure des variations d'intensité de faisceaux optiques transmis à travers ces matières, ces variations dépendant de l'état ou liquide desdites matières.

Il a déjà été mentionné plus haut que le dispositif selon l'invention pouvait être l'objet d'applications diverses, autres que celles orientées vers la surveillance de la température dans des réfrigérateurs notamment domestiques, par exemple dans des enceintes servant au transport d'aliments. Il va sans dire que l'invention peut être appliquée dans des conditions semblables à la vérification du caractère acceptable de la température dans toutes autres formes d'enceintes, par exemple congélateurs (dans lesquels, par exemple, les deux matières du dispositif selon l'invention consisteraient en deux eutectiques dont les points de fusion respectifs seraient, par exemple, de l'ordre de -15°C et -25°C).

## Revendications

1. Dispositif de vérification de la température régnant dans une enceinte, dès lors que cette température doit être maintenue dans un intervalle autorisé compris entre deux valeurs extrêmes déterminées, caractérisé en ce qu'il comporte, contenues dans un contenant commun, deux matières distinctes donnant respectivement lieu à des changements d'état aux températures égales à ces deux valeurs extrêmes, la vérification étant fondée sur la détection des états respectifs de ces deux matières, notamment de façon visuelle lorsque les parois du contenant sont transparentes, et en ce que ces deux matières sont non miscibles entre elles et contenues dans un même et unique compartiment du susdit contenant.

2. Dispositif selon la revendication 1, caractérisé en ce que les deux matières présentent des points de fusion constants, respectivement égaux aux deux susdites valeurs extrêmes, et en ce que la vérification est fondée sur la détection des états respectifs, solide ou liquide, de chacune de ces deux matières au moment de la vérification.

3. Dispositif selon l'une quelconque des revendications 1 à 2, caractérisé en ce que les deux matières consistent en deux eutectiques dont les températures de changement d'état sont respectivement égales aux deux valeurs extrêmes susdites, positives ou négatives.

4. Dispositif selon l'une quelconque des revendications 1 à 3, destiné à la vérification de la température dans une enceinte de réfrigération, notamment un réfrigérateur domestique, caractérisé en ce que l'une des matières est constituée par de l'eau et l'autre par un eutectique susceptible de passer de l'état solide à l'état liquide, à la température maximum autorisée dans le réfrigérateur.

5. Dispositif selon la revendication 4, caractérisé en ce que cette valeur maximum est de 6°C.

6. Dispositif selon l'une quelconque des revendications, caractérisé en ce que le susdit contenant consiste en un cylindre ou sphère hermétiquement fermé.

7. Dispositif selon l'une quelconque des revendications 4 à 6, caractérisé en ce que le contenant est associé à des moyens permettant la détection des états respectivement distincts, notamment solide ou liquide de chacune de ces deux matières, ces moyens étant aptes à produire des signaux exploitables de façon à fournir au dispositif de réfrigération associé à la susdite enceinte de réfrigération des impulsions de commande exploitées par le dispositif de réfrigération, soit pour faire des apports supplémentaires de frigories au sein de l'enceinte, soit au contraire pour réduire ou momentanément interrompre ces apports, jusqu'à ce que la température régnant dans l'enceinte soit ramenée dans l'intervalle autorisé de températures.

8. Procédé de vérification immédiate de la température effective régnant dans une enceinte réfrigérante, dès lors que cette température doit être maintenue dans un intervalle déterminé compris entre deux valeurs extrêmes, fondé sur la détection des états solide ou liquide, respectivement de deux matières distinctes non miscibles entre elles, contenues dans un même contenant, et donnant respectivement lieu à des changements d'état à des températures égales à ces deux valeurs extrêmes et à vérifier par l'examen ou la détection des états respectifs des deux matières si la température effective au sein de l'enceinte est comprise dans le susdit intervalle.

9. Procédé selon la revendication 8, caractérisé en ce que les deux matières présentent des températures de fusion correspondant respectivement aux valeurs extrêmes de l'intervalle autorisé de température, la détection impliquant, lorsque la température est comprise dans l'intervalle autorisé de variation, la constatation que la matière dont la température de fusion est la plus faible est à l'état liquide, et la matière dont la température de fusion est la plus élevée, est à l'état solide.

10. Procédé selon la revendication 9, caractérisé par des moyens émetteurs de signaux et des détecteurs respectivement associés à chacune desdites matières, susceptibles d'exploiter les signaux émis, respectivement fonction des états solide ou liquide desdites matières, pour fournir des impulsions de commande au dispositif de réfrigération associés à la susdite enceinte réfrigérante, pour autoriser soit des apports supplémentaires de frigories, soit, au contraire, une réduction de ces apports jusqu'à ce que la température régnant dans l'enceinte soit ramenée dans l'intervalle autorisé.

## Patentansprüche

1. Vorrichtung zum Überprüfen der in einem Behälter herrschenden Temperatur im Hinblick darauf, daß diese Temperatur in einem zulässigen Intervall zwischen zwei vorbestimmten Grenzwerten gehalten werden muß, dadurch gekennzeichnet, daß sie in einem gemeinsamen Behältnis zwei unterschiedliche Stoffe enthält, die bei Temperaturen gleich diesen Grenzwerten Zustandsänderungen erfahren, wobei die Überprüfung auf der Erfassung der jeweiligen Zustände dieser beiden Stoffe basiert, insbesondere in visueller Art und Weise, wenn die Wände des Behältnisses durchsichtig sind, und daß diese beiden Stoffe miteinander nicht mischbar und in ein und demselben Abteil des Behältnisses enthalten sind.

2. Vorrichtung nach Anspruch 1, dadurch gekennzeichnet, daß die beiden Stoffe den genannten Grenzwerten jeweils gleiche, konstante Schmelzpunkte aufweisen, und daß die Überprüfung auf der Erfassung der entsprechenden Zustände, fest oder flüssig, jedes der beiden Stoffe im Augenblick der Überprüfung basiert.

3. Vorrichtung nach einem der Ansprüche 1 oder 2, dadurch gekennzeichnet, daß die beiden Stoffe aus zwei Eutektika bestehen, deren Zustandsänderungstemperaturen den genannten Grenzwerten, seien diese positiv oder negativ, gleich sind.

4. Vorrichtung nach einem der Ansprüche 1 bis 3, die zur Überprüfung der Temperatur in einem Kühlbehälter, insbesondere in einem Haushaltskühlschrank, bestimmt ist, dadurch gekennzeichnet, daß einer der beiden Stoffe von Wasser und der andere von einem Eutektikum gebildet ist, das imstande ist, bei der höchsten, in dem Kühlschrank zulässigen Temperatur vom festen Zustand in den flüssigen Zustand überzugehen.

5. Vorrichtung nach Anspruch 4, dadurch gekennzeichnet, daß dieser höchste Wert bei 6°C liegt.

6. Vorrichtung nach einem der vorhergehenden Ansprüche, dadurch gekennzeichnet, daß das genannte Behältnis aus einem hermetisch geschlossenen Zylinder oder einer hermetisch geschlossenen Kugel besteht.

7. Vorrichtung nach einem der Ansprüche 4 bis 6, dadurch gekennzeichnet, daß das Behältnis mit Mitteln verbunden ist, die das Erfassen der unterschiedlichen jeweiligen Zustände, insbesondere des festen oder flüssigen Zustands jedes der beiden Stoffe erlauben, wobei diese Mittel imstande sind, auswertbare Signale zu erzeugen, um der mit dem genannten Kühlbehälter verbundenen Kühlvorrichtung Steuerimpulse zuzuführen, die durch die Kühlvorrichtung ausgewertet werden, sei es um innerhalb des Behälters zusätzliche Kälteeinheiten zuzuführen, sei es im Gegenteil, um diese Zufuhren zu verringern oder momentan zu unterbrechen, bis die in dem Behälter herrschende Temperatur in das zulässige Temperaturintervall zurückgeführt ist.

8. Verfahren zum sofortigen Überprüfen der effektiven, in einem Kühlbehälter herrschenden Temperatur, daraufhin, daß diese Temperatur in einem zwischen zwei Grenzwerten liegenden vorbestimmten Intervall gehalten werden muß, das darauf basiert, den festen oder flüssigen Zustand von zwei unterschiedlichen, miteinander nicht mischbaren Stoffen zu erfassen, die im selben Behältnis eingeschlossen sind und entsprechend Zustandsänderungen bei Temperaturen gleich den beiden Grenzwerten erfahren, und die durch Untersuchen oder Erfassen der jeweiligen Zustände der beiden Stoffe zu überprüfen sind, wenn die effektive Temperatur im Inneren des Behälters in dem genannten Intervall liegt.

9. Verfahren nach Anspruch 8, dadurch gekennzeichnet, daß die beiden Stoffe Schmelztemperaturen aufweisen, die jeweils den Grenzwerten des zulässigen Temperaturintervalls entsprechen, wobei die Erfassung, wenn die Temperatur im zulässigen Schwankungsintervall liegt, die Feststellung beinhaltet, daß der Stoff mit dem tieferen Schmelzpunkt im flüssigen Zustand und der Stoff mit dem höheren Schmelzpunkt im festen Zustand ist.

10. Verfahren nach Anspruch 9, gekennzeichnet durch jedem der Stoffe zugeordnete signalabgebende Mittel und entsprechende Detektoren, die geeignet sind, die abgegebenen Signale, nämlich in Abhängigkeit vom festen oder flüssigen Zustand der Stoffe auszuwerten, um der mit dem genannten Kühlbehälter verbundenen Kühlvorrichtung Steuerimpulse zuzuführen, sei es um eine zusätzliche Zufuhr von Kälteeinheiten, oder sei es im Gegenteil um eine Verringerung dieser Zufuhr zu bewirken, bis die in dem Behälter herrschende Temperatur in das zulässige Intervall zurückgeführt ist.

## Claims

1. A device for verifying the temperature that exists in an enclosure when said temperature is to be maintained in an allowed range extending between two determined extreme values, the device being characterized in that it comprises, contained in a common container, two distinct materials giving rise to changes of state at respective temperatures equal to said two extreme values, verification being based on detecting the respective states of the two materials, in particular visually when the walls of the container are transparent, and in that the two materials are mutually immiscible and are contained in the same single compartment of said container.

2. A device according to claim 1, characterized in that the two materials have constant melting points respectively equal to said two extreme values, and in that verification is based on detecting the respective solid or liquid states of each of the two materials at the moment of verification.

3. A device according to claim 1 or 2, characterized in that the materials consist in two eutectics whose change of state temperatures are respectively equal to said two extreme, positive or negative values.

4. A device according to any one of claims 1 to 3, for verifying the temperature in a refrigeration enclosure, in particular a household refrigerator, characterized in that one of the materials is constituted by water and the other by a eutectic suitable for passing from the solid state to the liquid state at the maximum temperature allowed in the refrigerator.

5. A device according to claim 4, characterized in that said maximum value is 6°C.

6. A device according to any preceding claim, characterized in that said container consists in a hermetically closed cylinder or sphere.

7. A device according to any one of claims 4 to 6, characterized in that the container is associated with means for detecting the respective distinctive states of each of the two materials, in particular solid or liquid states, said means being suitable for producing signals that can be used to supply control pulses to refrigeration apparatus associated with said refrigeration enclosure, which signals are used by the refrigeration apparatus either to supply additional frigories within the enclosure, or else on the contrary to reduce or temporarily interrupt these supplies, until the temperature that exists inside the enclosure has been returned to the allowed temperature range.

8. A method of immediately verifying the temperature that actually exists in a refrigerating enclosure when said temperature is to be maintained in a determined range lying between two extreme values, the method being based on detecting the solid or liquid states respectively of two distinct and mutually immiscible materials contained in the same container and giving rise to changes of state at respective temperatures equal to said two extreme values, and in verifying whether the temperature actually present in the enclosure lies within said range by examining or detecting the respective states of the two materials.

9. A method according to claim 8, characterized in that the two materials have melting temperatures corresponding respectively to the extreme values of the allowed temperature range, such that when the temperature lies in the allowed range of variation, detection implies observing that the material having the lower melting temperature is in the liquid state and the material having the higher melting temperature is in the solid state.

10. A method according to claim 9, characterized by signal emitters and detectors respectively associated with each of said materials, suitable for responding to the signals emitted as a function of the respective solid or liquid states of said materials, to supply control pulses to refrigeration apparatus associated with said refrigerating enclosure either to authorize additional supplies of frigories, or else on the contrary to reduce these supplies until the temperature that exists inside the enclosure is brought into the allowed range.
